(19) Europäisches Patentamt
European Patent Office
Office européen des brevets

(11) Publication number: **0 512 871 A1**

## (12) EUROPEAN PATENT APPLICATION

(21) Application number: **92306017.2**

(22) Date of filing: **30.06.92**

(51) Int. Cl.⁵: **C08J 9/10**, B29C 43/36, C08L 23/04

(30) Priority: **27.03.92 GB 9206697**

(43) Date of publication of application:
**11.11.92 Bulletin 92/46**

(84) Designated Contracting States:
**AT BE CH DE DK ES FR GB GR IT LI LU NL PT SE**

(71) Applicant: **W.R. Grace & Co.-Conn.**
**1114 Avenue of the Americas**
**New York New York 10036(US)**

(72) Inventor: **White, Steven Andrew Carl**
**1, Fox Grove, Godmanchester**
**Huntingdon, Cambridgeshire, PE18 8BN(GB)**

(74) Representative: **Jones, Helen Marjorie Meredith**
**Gill Jennings & Every 53-64 Chancery Lane**
**London WC2A 1HN(GB)**

(54) **Foamable compositions for container closure gaskets.**

(57) This invention relates to a process for providing a foamed gasket in a container closure, especially for metal bottle caps, and to the compositions for use in the process.

The composition is in the form of an extrudate and comprises a thermoplastic polymer matrix which is substantially free of chlorinated-olefin based polymer material, with a foaming agent.

The gasket forming composition is introduced into the closure in the form of a molten or semi-molten extrudate. The composition is then moulded in the closure at a temperature below the decomposition temperature of the foaming agent and then the gasket is heated to a temperature at which the foaming agent decomposes to produce a foamed gasket.

Figure 1

The present invention relates to a process for providing a foamed gasket in a container closure, especially for metal bottle caps, and to the compositions for use in the process.

A wide variety of processes and compositions have been proposed for forming the gasket in various container closures, for instance bottle caps. These include introducing the gasket composition in the form of plastisol, a solution in an organic solvent, an aqueous dispersion, including aqueous latices, and as a mouldable thermoplastic composition. An early disclosure of the use of thermoplastic compositions for forming container closures is disclosed in GB-A-1,112,023 and GB-A-1,112,025.

Methods that are described in these two patents which were known at that time include inserting and bonding a preformed uniform disc into the cap, inserting and bonding a preformed contoured disc into the cap, flowing a composition into the cap while rotating it and optionally moulding it, flowing a composition into the cap and moulding it while the composition is still hot, transferring a disc of composition from a carrier backing onto a metal plate which is then formed into a closure, transferring composition by a moulding die and moulding it into the cap, compression moulding the composition into the cap, and so on. In the new method described in detail in '023, the composition was formed into a sheet, discs were cut from it and the discs were then inserted into the preheated caps and cold moulded into the caps. In many of the examples the inserted disc had a diameter substantially the same as the diameter of the cap.

Thermoplastic compositions that were described include blends of ethylene vinyl acetate (EVA) and micro crystalline wax, EVA and low density polyethylene (LDPE) having a melt flow index (MFI) of 7, similar blends containing also butyl rubber having Mooney viscosity of 7O, a blend of equal amounts of LDPE having MFI 7 with butyl rubber having Mooney 7O, blends of different types of EVA, a blend of LDPE with polyisobutylene, a blend of EVA with ethylene propylene copolymer, an ethylene acrylic acid ester copolymer, a blend of this with LDPE, a blend of LDPE with ethylene propylene copolymer, and a blend of LDPE with chloro sulphonated polyethylene.

Various disclosures of forming gaskets from thermoplastic compositions have appeared from time to time since then and these have listed a wide variety of polymers that can be used. Generally, most of the polymers named above have been listed.

In one process for forming a gasket of a thermoplastic material, a thermoplastic polymeric composition in molten form is continuously cut into molten pieces which are then transferred into a container cap, followed by moulding in situ using a die, to form a gasket in the cap. Such process is for instance described in US-A-4277431. In EP-A-0331485 a development of that process is described in which the problem of stickiness of the molten thermoplastic polymeric compositions is overcome by the incorporation of a melt-release material in the composition which prevents the thermoplastic material sticking to the cutting and transfer means.

Polyvinyl chloride (PVC) based gasketing compositions have been widely used, for instance in crown caps used for beer bottles. The PVC-based composition has been applied by two main processes, in one of which the composition is introduced in the form of a plastisol and in the other of which it is introduced in the form of a molten or semi-molten extrudate.

For some applications it has been desirable to provide a foamed gasket, since this allows the use of reduced weight of thermoplastic material whilst maintaining good sealing properties. Foamed PVC based gaskets have been used commercially for many years. Where the PVC is introduced in the form of a plastisol, a chemical foaming agent is predispersed in the plastisol, the plastisol is either pregelled after introduction into the container closure by a hot moulding process at a temperature below the decomposition temperature of the foaming agent, or is distributed in the cap by spinning the cap at high speed and then the closure is passed through an oven at a temperature above the decomposition temperature of the foaming agent to flux and foam the composition. The density of the final gasket can be reduced to around 0.35, the specific gravity of the starting PVC material generally being around 1.2.

For processes in which the PVC is introduced by extrusion of a molten material (the "dry blend process"), a chemical foaming agent is blended into a dry blend of PVC and plasticiser prior to its extrusion so as to be dispersed throughout the PVC matrix without foaming. The mixture is extruded and pelletised. The pellets are then fed to the extruder of a moulding machine from which it is extruded directly into the crown cap at a temperature above the decomposition temperature of the foaming agent to foam the composition. The gasket is then cold moulded to the desired shape. During the cold moulding step of the foamed molten material, although some of the foam may be lost, the gasket nevertheless maintains an adequate degree of foam.

When it is attempted to process thermoplastic gasketing compositions of the type described in GB-A-1,112,023 and '5, comprising non-chlorinated olefin based polymers, such as olefin copolymers with thermoplastic rubbery materials, it is found that the pre-foamed material is knocked down and loses practically all of the foaming, during the cold moulding step. The process is therefore of no utility for these

2

types of gasket forming compositions.

In GB-A-1,232,794 a foamed gasket based on a thermoplastic material is produced by introducing into the closure a powder comprising the thermoplastic material blended with powdered blowing agent, heating the powder mixture in the closure, moulding the heated powder under pressure with a cold moulding member to cause the powder to coalesce, followed by heating the gasket to a temperature above the decomposition temperature of the foaming agent. The polymers which are suggested for use include olefin polymers as well as chlorinated polyethylene and PVC. The sole example uses PVC.

GB-A-1,211,780 also discloses the introduction of a powder blend of thermoplastic material and foaming agent into a closure, followed by profile moulding at a temperature below the decomposition temperature of the foaming agent, and subsequently heating the gasket to foam the material. Other examples use PVC, chlorinated polyethylene, ethylene/vinyl acetate (EVA) copolymer and polypropylene. In comparative experiments, the powder was, instead of being formed in situ in the closure, formed into sheets at a temperature below the decomposition of the foaming agent, the sheet was subsequently cut into disks which were inserted into the closure. It is stated that the disks were subsequently moulded in a similar manner to the powder based compositions. There is no statement that the gasket is subsequently foamed.

A problem with using a blend of powdered thermoplastic material and powdered foaming agent is that it can be difficult to achieve a homogeneous blend, especially one which does not separate during storage, transport or in dispensing apparatus. Furthermore it can be difficult to achieve and maintain good distribution of the powder in the container closure between the time the powder is inserted into the cap, during transportation in line to the final moulding step to form a uniform gasket.

According to the present invention there is provided a new process in which a gasket is formed in a container closure by a process in which a gasket forming composition is introduced into the closure, the composition comprising thermoplastic material and a foaming agent dispersed in the material and being substantially free of chlorinated olefin based polymer, moulding the composition in the closure using a die member such that the composition is at a temperature below the decomposition temperature of the foaming agent and then heating the gasket to a temperature at which the foaming agent decomposes to produce a foamed gasket, and is characterised in that the gasket forming composition is introduced into the closure in the form of a molten or semi-molten extrudate in which the foaming agent is substantially uniformly dispersed throughout a matrix of the thermoplastic material.

The thermoplastic material used in the process is free of chlorinated olefin-based polymers such as PVC.

The thermoplastic material may consist solely or primarily (for instance more than 80%) of an olefin-based polymer, for instance poly-ethylene. Preferably, however, the thermoplastic material consists of a mixture of 40-80% by weight of an olefin-based polymer and 20-60% by weight of a rubbery polymer, polystyrene ethylene-vinylalcohol, ethylene-vinylacetate and/or ethylene-acrylate copolymer. The olefin-based polymers are for instance homopolymers of ethylene and copolymers of ethylene with propylene, butylene, vinyl acetate, vinyl alcohol and/or acrylates, as well as propylene homopolymers and copolymers, butylene homopolymers and copolymers etc. The rubbery polymer is selected from, for instance, ethylene-propylene rubber, acid modified ethylene propylene copolymers, butyl rubber, polybutadiene, styrene butadiene rubber, carboxylated styrene butadiene rubber, polyisoprene, styrene block copolymers such as styrene isoprene styrene copolymers, styrene butadiene styrene copolymers and styrene ethylene butylene styrene copolymers or styrene ethylene propylene styrene copolymers. Acrylates copolymerised with ethylene are usually alkyl(meth)acrylates, such as butyl acrylate.

Preferably the polymer or mixture of polymers which comprise the thermoplastic material have a relatively low melt flow index (MFI). The melt flow index in the context of the present specification is measured by British Standard 2782, Part 7, Method 720A. In the present invention the melt flow index is preferably less than 100, more preferably in the range 1 to 50, especially 2 to 20.

A low melt index indicates a high viscosity. A higher viscosity material (for instance with a MFI less than 1) would require higher extrusion temperature, which in turn means that a foaming agent having a higher decomposition temperature would be required, and this in turn would mean that the temperature during the foaming stage would have to be higher; all of which is undesirable since the higher temperature could lead to thermal decomposition and/or oxidation of the material.

Container closures which are used in the invention may be formed of plastics material or, preferably, metals. The closure types include crown caps including twist-off crowns, roll-on caps, screw-caps, ring-pull caps, etc. any of which may incorporate a pilfer-proof or tamper-evident feature. The invention is of particular value for providing gaskets in crown caps, including twist-off crowns.

In the process the foaming step is carried out a temperature above the decomposition temperature of the foaming agent, that is preferably at least 160°C, more preferably at least 180°C, for instance in the

EP 0 512 871 A1

range 180-250°C. The heating is preferably carried out by a technique which ensures that substantially the entire gasket material is heated uniformly, so that the foaming is uniform. The heating is for instance carried out in a hot air oven or is heated by infra-red or dielectric or electromagnetic induction heating.

In the process the moulding step is preferably carried out using a die member which is at a temperature lower than the temperature of the composition in the closure. The die may be maintained at such a temperature by cooling with circulating water at a temperature of less than 20°C, preferably in the range 0 to 10°C.

During the process the closure is preferably heated. The heating may be carried out before, during or after extrusion of the material into the closure.

In a preferred process the molten or semi-molten material is extruded into a preheated closure. The temperature to which the closure is heated is generally less than the decomposition temperature of the foaming agent and is preferably in the range 100 to 200°C. By heating the closure, successful formation of the desired gasket and adhesion to the closure is achieved. By maintaining the temperature of the die member used for the cold moulding step at a low level, adhesion of the gasket material to the die is minimised.

The present invention further comprises a new apparatus capable of being used to carry out the first aspect of the invention, and which comprises means for extruding a gasket forming composition and transferring the molten extrudate into a container closure at an application station, a die capable of moulding the extrudate in situ in the container closure at a moulding station to form a gasket, temperature controlling means for maintaining the temperature of the composition in the apparatus during the extrusion and moulding operation below a predetermined temperature, characterised by comprising gasket heating means for heating the gasket in the closure to above a second predetermined temperature after the moulding station.

In the new apparatus the temperature controlling means for maintaining the temperature during the extrusion and moulding step preferably includes cooling means for the die. The heating means, by which the gasket is foamed, may comprise a hot air oven, or infra-red, dielectric or electromagnetic induction heating. The heating means is preferably able to be controlled to ensure uniform heating of the gasket.

The apparatus is preferably able to operate at very high speed. For instance preferably at least 100, more preferably at least 300, and frequently more than 500 and even up to two thousand or more closures per minute should be able to be processed in the apparatus.

Although the gasket forming composition may be mixed from its individual components in a mixer/extruder, immediately prior to being used in the process, it is convenient for the mixture to be preformed, usually by blending the component materials, at raised temperature and, optionally, at raised pressures, such that the temperature during processing is such that the materials are sufficiently molten to be blended but is below the decomposition temperature of the foaming agent, for instance in the range 100 to 180°C preferably 130 to 150°C, and then extruding and collecting the blended material in the form of pellets.

According to a further aspect of the invention there is provided a new composition in the form of an extrudate comprising a thermoplastic polymer matrix and a foaming agent dispersed substantially uniformly throughout the matrix, and in which the thermoplastic polymer matrix is substantially free of chlorinated-olefin based polymer material.

According to a further aspect of the invention there is provided a new process in which a foaming agent in powder form is blended with a molten or semi-molten thermoplastic material, which is substantially free of chlorinated olefin-based polymer, and is then extruded, the temperature throughout the process being maintained below the decomposition temperature of the foaming agent.

In these further aspects of the invention the thermoplastic polymer is any of those mentioned above as preferred materials to be used in the first aspect of the invention. The temperature during the processing in the further aspect of the invention is preferably in the range quoted above for the temperature during the extrusion and cold moulding step of the first aspect of the invention, thus below the decomposition temperature of the foaming agent.

The composition of this further aspect of the invention, as well as that formed by the further process, is of particular value for forming the gasketing material used in the first aspect of the invention.

The gasket forming material may comprise ingredients to improve processing characteristics, for instance to aid extrusion and prevent adhesion of the material to components of mixers and/or extruders, as well as cutting and transfer means by which extrudate is transferred into container closures. Such additives may for instance comprise melt-release material, of the type described in EP-A-0,331,485. The melt release material may be any of those disclosed in that earlier specification, for instance fluorocarbon polymers and organosilicon polymers (siloxanes). Particularly preferred materials are perfluorohydrocarbons

4

(fluoroelastomers), for instance polytetrafluorethylene. The melt-release materials tend to migrate to the surface of material being treated and thereby coat apparatus in which the compositions are contained.

The compositions may also comprise fatty amides or other slip aids. The composition may also comprise other additives such as filler, pigments, stabilisers and antioxidants. These additives are generally present in an amount of below 20%, preferably less than 10%, often below 5%, most preferably below 2%, based on the total weight of the composition.

Another additive which is conventionally used in gasket forming compositions is a hydrocarbon oil, such as white oil. This assists the handling of the compositions. The amount of such oil is, for instance in the range 0.1 to 20% by weight, preferably in the range 1 to 10% by weight.

The foaming agent used in the present invention is preferably an azo compound, which decomposes to form nitrogen gas. The agent may be any of those conventionally used in foamed PVC based gaskets, such as azodicarbonamide. The foaming agent is preferably included in the gasket forming composition in an amount of at least 0.2%, by weight, although it is generally unnecessary to include more than 5% by weight. Normally the amount is in the range 0.5 to 4% by weight, for instance in the range 1 to 3% by weight.

The gasket forming composition may comprise a catalyst or kicker for the foaming agent. Such kickers are known and generally act to reduce the temperature at which the foaming agent decomposes. Such kickers comprise for instance zinc or calcium salts or oxide, especially the oxalate or stearate salts, as well as citric acid and/or urea. The ratio of the amount of kicker to foaming agent is generally in the range 5:1 to 1:5, usually in the range 2:1 to 1:2. Preferably the kicker and foaming agent are included in approximately equal weight amounts.

The foaming agent, and any kicker, are mixed into the thermoplastics materials as a powder. The particle size of the powder is not critical for ensuring that the the gasket foams, although may affect decomposition temperature and the cell size in the foamed material. Optimum particle size for the desired process conditions and product properties can be determined by a person skilled in the art.

By the present invention foamed gaskets having specific gravity of less than 0.8, and often less than 0.6, which retain good sealing properties have been produced based on thermoplastic materials which are difficult to foam. The use of this foamed gasket improves its resilience and sealing properties as compared to the equivalent unfoamed composition. Furthermore the use of lower quantity of gasket forming composition is made possible. For instance the weight of material used to form a gasket in a standard crown cap may be less than 200 mg, for instance around 150 mg, whereas a standard unfoamed gasket of thermoplastic material might weigh around 210 mg.

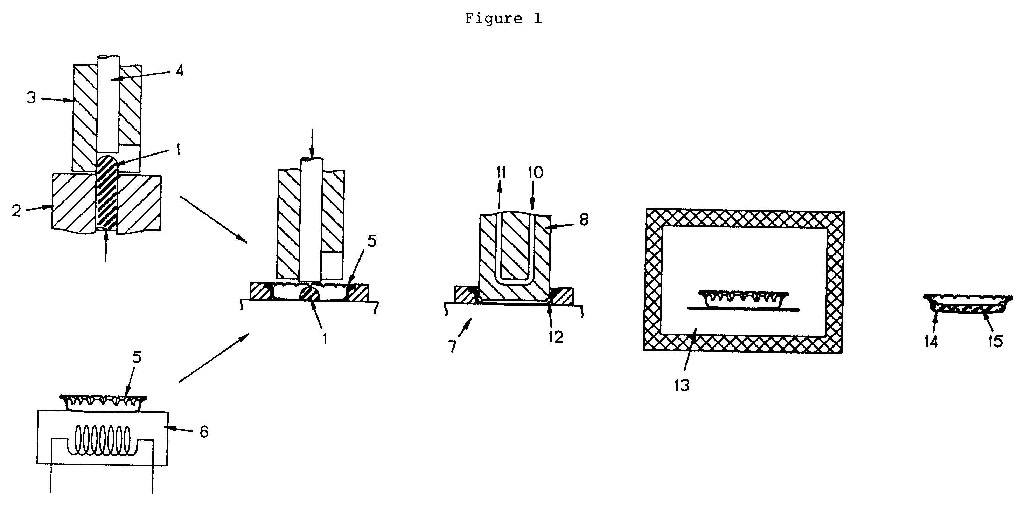

Figure 1 is a schematic diagram showing the apparatus for forming the foamed gasket in a container closure.

In the figure thermoplastic gasket forming material 1 including a foaming agent is extruded from an extruder 2 in which the composition is maintained at about 140°C and from which it is transferred by transfer arm 3 which moves across the exit of the extruder. Arm 3 includes a member 4 which is retracted whilst the thermoplastic material is picked up from the extruder. Meanwhile a closure 5 is preheated on heating means 6. The arm is then moved to a position adjacent to the preheated container closure 5, and the thermoplastic material previously picked up by the arm is deposited in the closure by extending the member 4 to push the thermoplastic material into contact with the heated closure 5. The arm 4 is then moved clear of the closure which is transferred to a moulding station 7 which comprises a die 8. The die is cooled by circulating cooling water 10, 11. The die is used to mould the thermoplastic material to form the desired gasket profile 12 in the closure. The closure is then transferred into a heater 13, for instance a hot air oven which is maintained at a temperature of 210°C where it remains for about 1 minute. The finished closure with foamed gasket 15 is cooled after removal from the oven.

The invention is further illustrated in the following example:

Example

The following ingredients, in powder form, were compounded in a screw mixer and extruded at a temperature of 140°C to form pellets.

| Low density polyethylene | 65 |
|---|---|
| Ethylene/propylene rubber | 27.5 |
| White oil | 7.5 |
| Azo di carbonomide | 2.5 |

The pellets were then fed into a SACMI PM 1000 machine and used to form gaskets in crown caps. The extruder operated at a temperature of 140°C, the caps were preheated before the composition was introduced into them and the die used to mould the gaskets was cooled by circulating water so that adhesion of composition to the die was minimised. The caps were then heated in a hot air oven at a temperature of 210°C for one minute. The resulting foamed gasket had a specific gravity of 0.69 and satisfactory sealing performance (that is the gasket maintains a seal when the pressure inside the bottle is up to about 10 bar).

**Claims**

1. A composition in the form of an extrudate comprising a thermoplastic polymer matrix and a foaming agent dispersed substantially uniformly throughout the matrix, and in which the thermoplastic polymer matrix is substantially free of chlorinated-olefin based polymer material.

2. A composition according to claim 1 in which the thermoplastic materials consists of a mixture of 40-80% by weight of an olefin-based polymer and 20-60% by weight of a rubbery polymer, polystyrene ethylene-vinylalcohol, ethylene-vinylacetate and/or ethylene-acrylate copolymer.

3. A composition according to claim 2 in which olefin-based polymer is selected from homopolymers of ethylene and copolymers of ethylene with propylene, butylene, vinyl acetate, vinyl alcohol and/or acrylates, as well as propylene homopolymers and copolymers, butylene homopolymers and copolymers.

4. A composition according to claim 2 or 3 in which a rubber polymer is selected from ethylene-propylene rubber, acid modified ethylene propylene copolymers, butyl rubber, polybutadiene, styrene butadiene rubber, carboxylated styrene butadiene rubber, polyisoprene, styrene block copolymers such as styrene isoprene styrene copolymers, styrene butadiene styrene copolymers and styrene ethylene butylene styrene copolymers or styrene ethylene propylene styrene copolymers.

5. A composition according to any preceding claim in which the thermoplastic material has a melt flow index less than 100, preferably in the range 1 to 50.

6. A composition according to any preceding claim in which the foaming agent is present in the composition in an amount in the ragne 0.2 to 5% by weight, preferably 1 to 3% by weight, and is preferably azodicarbonamide.

7. A process in which a foaming agent in powder form is blended with a molten or semi-molten thermoplastic material, which is substantially free of chlorinated olefin-based polymer, and is then extruded, the temperature throughout the process being maintained below the decomposition temperature of the foaming agent.

8. A process in which a gasket forming composition is introduced into a closure, the composition comprising thermoplastic material and a foaming agent dispersed in the material and being substantially free of chlorinated olefin based polymer, by moulding the composition in the closure using a die member such that the composition is at a temperature below the decomposition temperature of the foaming agent and then heating the gasket to a temperature at which the foaming agent decomposes to produce a foamed gasket, characterised in that the gasket forming composition is introduced into the closure in the form of a molten or semi-molten extrudate in which the foaming agent is substantially uniformly dispersed throughout a matrix of the thermoplastic material.

9. A process according to claim 8 in which the temperature of the composition during the foaming step is at least 160°C, preferably in the range 180 to 250°C.

10. A process according to claim 8 or 9 in which the closure is heated during the process, preferably before or during extrusion of the gasket forming material into the closure.

11. A process according to any of claims 7 to 10 in which the extruded composition has the further features of any of claims 2 to 6.

12. Apparatus for carrying out a process according to any of claims 8 to 10 comprising means for extruding a gasket forming composition and transferring the molten extrudate into a container closure at an application station, a die capable of moulding the extrudate in situ in the container closure at a moulding station to form a gasket, temperature controlling means for maintaining the temperature of the composition in the apparatus during the extrusion and moulding operation below a predetermined temperature, characterised by comprising and gasket heating means for heating the gasket in the closure to above a second predetermined temperature after the moulding station.

13. Apparatus according to claim 112 in which the temperature controlling means for maintaining the temperature during the extrusion and moulding step, includes cooling means for the die.

14. Apparatus according to claim 12 or 13 in which the gasket heating means comprises a hot air oven, or infra-red, dielectric or electromagnetic induction heating.

Figure 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 072 444 (DYNAMIT NOBEL)<br>* page 11, line 6 - line 11 *<br>* page 6, line 6 - line 27 *<br>* page 7, line 18 - page 8, line 26 *<br>* page 10, line 19 - line 24 *<br>--- | 1-6,9 | C08J9/10<br>B29C43/36<br>C08L23/04 |
| X | WORLD PATENTS INDEX LATEST<br>Derwent Publications Ltd., London, GB;<br>AN 81-769700<br>& JP-A-56 113 553 (UCH YAMA CORK)<br>* abstract *<br>--- | 1,7,8,<br>12-13 | |
| D,X | EP-A-0 331 485 (W.R.GRACE)<br>* column 1, line 48 - column 2, line 22 *<br>* column 2, line 47 - line 50 *<br>--- | 12 | |
| X | EP-A-0 075 460 (BATA)<br>* page 4, line 27 - line 34 *<br>--- | 7 | |
| D,X | DE-A-1 544 989 (W.R.GRACE)<br><br>* page 2, paragraph 3.4. *<br>* page 4, last paragraph *<br>* page 6, paragraph 1. *<br>* page 8, last paragraph - page 9, paragraph 1.<br>*<br>* page 11, paragraph 2 *<br>* page 12, paragraph 7.9. *<br>* page 13, paragraph 11. *<br>* page 13, paragraph 12. *<br>* page 13, paragraph A - page 14, paragraph BD *<br>* page 17, last paragraph - page 18, paragraph 1. *<br>--- | 1-6,8,<br>10,11-14 | **TECHNICAL FIELDS SEARCHED (Int. Cl.5)**<br><br>C08J<br>B29C<br>B65D<br>C08L |
| X | US-A-4 232 086 (TOYO SEIKAN KAISHA)<br><br>* column 1, line 61 - line 68 *<br>* column 10, line 17 - line 46 *<br>* column 10, line 56 - column 11, line 63 * | 1-8,<br>10-12 | |

The present search report has been drawn up for all claims

| Place of search | Date of completion of the search | Examiner |
|---|---|---|
| THE HAGUE | 24 AUGUST 1992 | SCHMIDT H. R. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| | ----- | | |

TECHNICAL FIELDS
SEARCHED (Int. Cl.5 )

The present search report has been drawn up for all claims

| Place of search | Date of completion of the search | Examiner |
|---|---|---|
| THE HAGUE | 24 AUGUST 1992 | SCHMIDT H.R. |